# EUROPEAN PATENT SPECIFICATION

(11) **EP 1 347 554 B1**
(45) Date of publication and mention of the grant of the patent: **11.11.2009**
(21) Application number: 02425181.1
(22) Date of filing: 22.03.2002
(51) Int. Cl.: H02J 9/00

(54) **An improved electrical switchboard provided with transitory power supply means operating in case of blackout**
Ein verbessertes elektrisches Schaltfeld mit transistorischem Stromversorgungsmittel, das im Blackoutfall funktioniert
Un tableau électrique amélioré muni d'alimentation de puissance transitoire fonctionnant pendant un blackout

(43) Date of publication of application: 24.09.2003
(73) Proprietor: S.I.R.T.A. SRL, 00199 Roma (IT)
(72) Inventor: Cerrito, Lorella Maria, 00139 Roma (IT)
(74) Representative: Sarpi, Maurizio

(56) References cited:
- US-A- 4 381 457
- US-A- 4 888 495
- US-A- 5 089 928
- US-A- 5 905 619

## Description

The present invention relates to the field of the power supply and in particular an improved electrical switchboard which is especially but not exclusively suitable to the application in the domestic electric installations typically existing in houses.
The present domestic electric installations are provided with differential switches, so-called safeguard switches, to be installed typically downstream of the electricity meter but in any case upstream of any user.
In order to overcome the problem of the sudden, troublesome blackout, electrical generators provided with automatically started, internal combustion engine or the so-called uninterruptible power systems (UPS) are used, the latter being provided with batteries able to supply the user with power more or less quickly according to types and requirements.
Even if such UPS are effective, they have the drawback of being cumbersome and require a special care in the electric installation as well as a suitable place so that they cannot be proposed for private users especially where flats are very small.

It is known, from FR2638910, an electrical switchboard comprising one or more differential and/or magnetothermal switches, wherein there is provided a transitory power supply means operating in case of blackout or an interruption of the electric power delivery, said power, supply means being a removable battery or accumulator.
Even if said known device is suitable for electrically powering the computer and datacom hardware in an uninterrupted or virtually uninterrupted manner, and in all cases where hardware requires a backed-up or interruption-free power supply, it has the drawback that is not able to provide both a differential protection and a power supply of the lights during a blackout.

Therefore, the main object of the present invention is to overcome the above-mentioned problems by providing a device to be installed in the place of the electrical switchboard of the typical electric installations which is capable of both performing the function of a differential switch and supplying transitorily minor users, such as lights but not domestic appliances, with electric power in case of blackout.

The invention relates to an improved electrical switchboard according to claim 1.

According to the present invention, this has been accomplished by providing a device of the type described above which is provided with one input and two outputs for the electric power that are protected by differential high-sensitivity switches of the known type. Advantageously, this does not involve any change in the installation because the domestic installations are usually divided into two sections, one for lighting, one for domestic appliances such as white goods.

In accordance with the invention, in case of blackout the section of the minor users (lighting) is disconnected automatically from the main supply line and is supplied by the power of a suitable high-capacity buffer battery arranged in the same device. During normal operation of the mains, the battery is being charged.

The advantages of the invention are self-evident from the foregoing. In fact, in addition to the typical function of life safeguard, it also performs the function of ensuring the continuity of power supply for minor users which are useful to avoid unpleasant troubles or even accidents occurring during sudden blackouts without flat dwellers have arranged anything. In such cases, the latter are compelled to grope their way in the dark for flashlights, candles or the like.

A better understanding of the invention will result from the following detailed description with reference to the accompanying drawings that show a preferred embodiment thereof only by way of a not limiting example.
In the drawings:

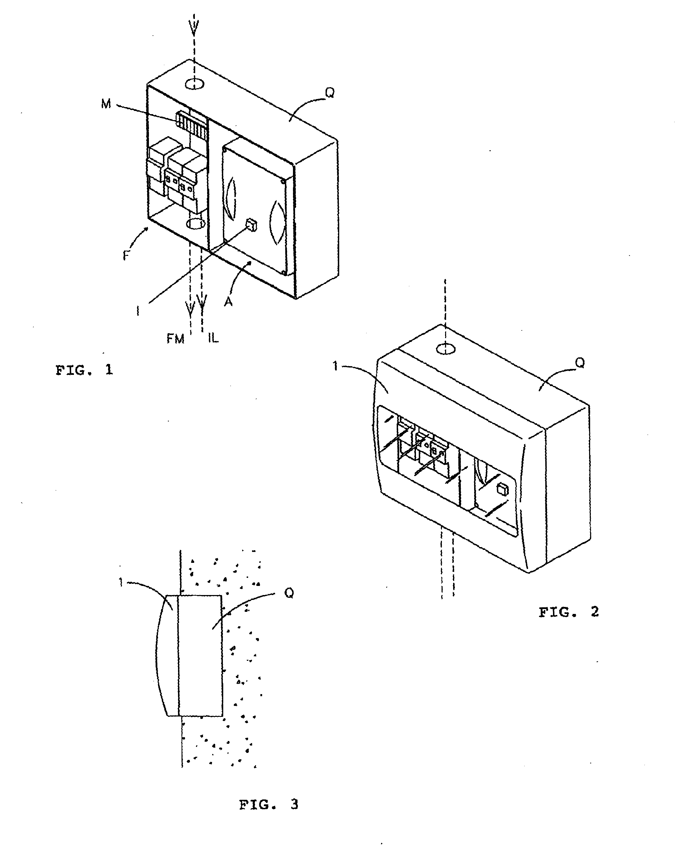

Figure 1 is a perspective view of the invention without the protection cover;
Figure 2 similar to the previous one shows the invention provided with protection cover;
Figure 3 is a cross section view along a vertical plane showing the device of the invention installed to a wall;

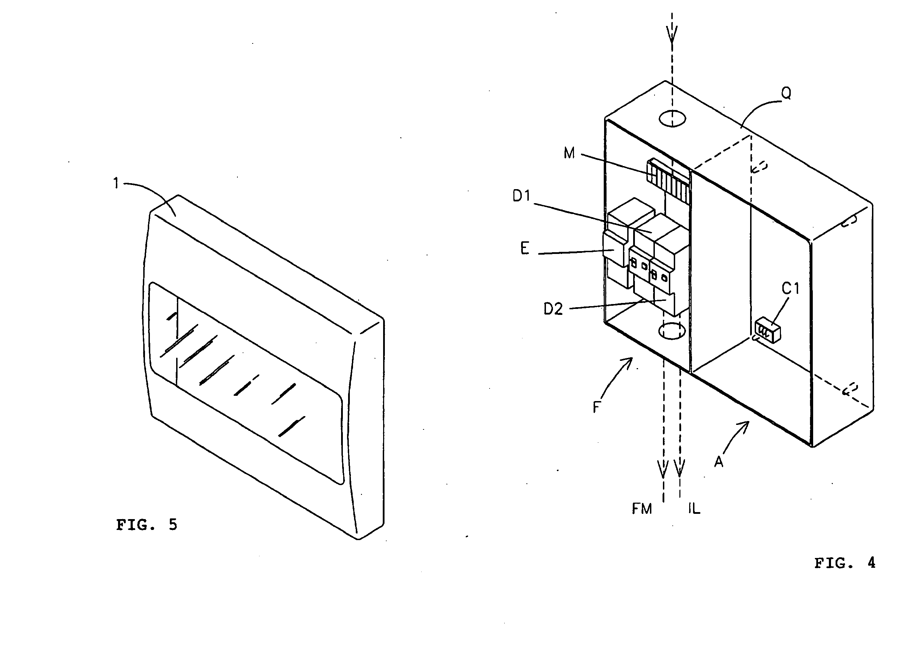

Figure 4 is a perspective view that shows the details of some components of the invention;
Figure 5 shows the cover of the electrical switchboard;

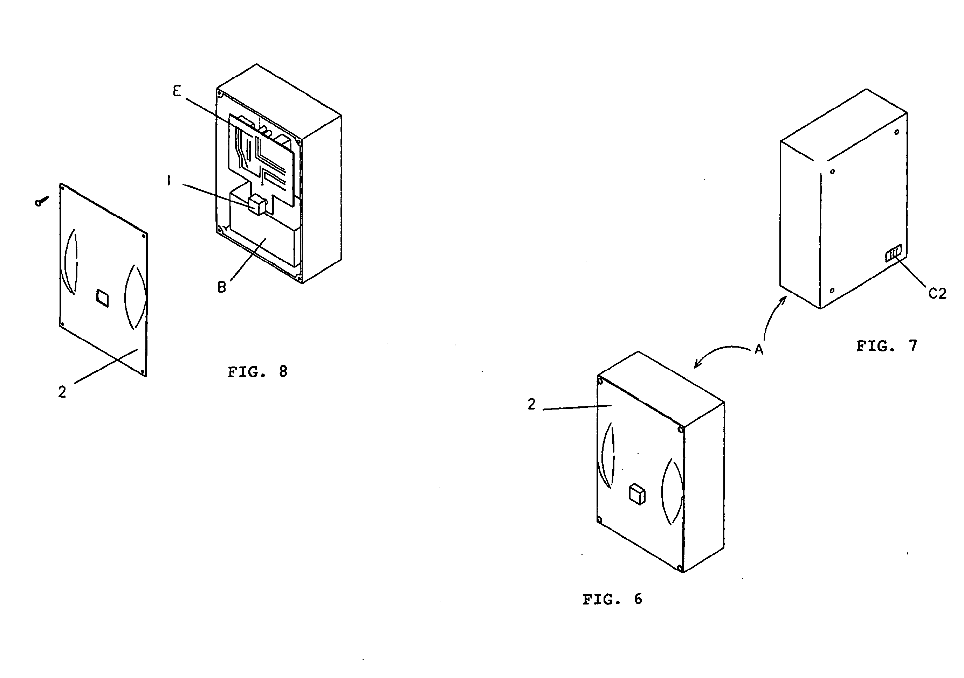

Figures 6 and 7 show the front and back sides of the removable module, respectively;
Figure 8 is an exploded view showing a perspective view of the inside of the removable module; and
Figure 9 is a diagram of the electric circuit of the invention.

With reference to the figures, the invention consists essentially of an electrical switchboard provided with typical terminal strips M for the connection of the mains input cables and cables supplying outlets FM and switches IL of the general electric installation with motive power. Such switchboard is divided into two rooms, one for a fixed module F, one for a mobile or removable module A capable of being electrically connected to the fixed module.

It should be noted that minor users, i.e. those with less absorbed power (lighting), would be most useful if it were possible to keep them lighting as they could avoid to fall into the dark in case of blackout, thus giving the time to find candles, flashlights and the like for the transitory lighting of the rooms.

Fixed module F includes at least two magnetothermal differential switches D1 and D2, a teleswitch or relay R and a plug connector C1 for the electric connection to mobile module A.

Mobile or removable module A includes a battery B of the known type, an electronic circuit E controlling the power supplied by the battery in case of blackout and the charge of the same battery during the normal electric power supply, and a plug connector C2 conjugated to plug connector C1 of the fixed module F.

Connectors C1 and C2 are preferably quick-coupling connectors.

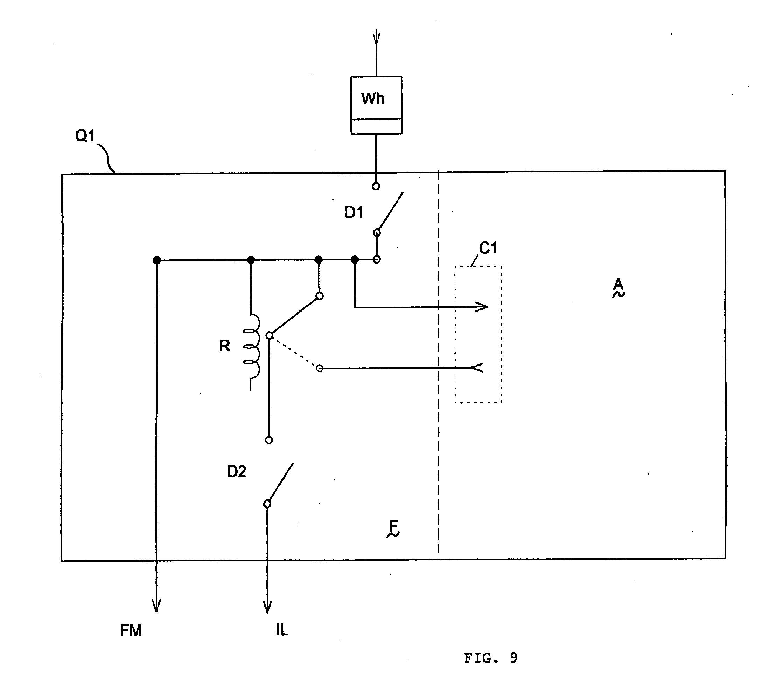

The electric diagram of the invention is schematically shown in figure 9. Located downstream of the power supply input is the first magnetothermal differential switch D1 which supplies directly the two sections of the electric installation, i.e. the section of the motive force FM (white goods) and the section of minor users IL (lighting).

According to the present invention, the lighting section IL is supplied by a relay or teleswitch R providing for the disconnection of the lighting section IL from the general power supply in a few milliseconds and for the connection of the same through connector C1 to battery B in case of blackout. The power supply of battery B is controlled by the electronic control circuit E in a known manner.

Located downstream of relay R is a second differential switch D2 which is indispensable when the supply is derived from battery B and the mains power supply as well as the first differential switch D1 is disconnected.

Such relay R is preferably fed directly from the general power supply downstream of the first differential switch D1 and has a rest position, i.e. a position in which the relay is brought in case of a voltage drop, corresponding to the connection of lighting section IL to battery B.

The supply that charges battery B under the control of the electronic circuit E is derived through connector C1 from the first differential switch D1.

It is self-evident from the foregoing that, if there is no removable module A, the lighting system cannot be supplied with electric power in case of blackout, and the invention operates like a conventional electrical switchboard with all of the limitations and drawbacks mentioned above.

According to a peculiar feature of the invention, during the mains power supply or when lighting is not necessary, the removable module A can be connected/disconnected to/from its housing without any contrary direction as relay R disconnects it from the electric installation. For example, if it is necessary to replace such module for maintenance purpose, it is sufficient to open cover 1 of the described electrical switchboard, to remove the removable module (if present), and to connect a new module A to its housing. All of this is carried out without disconnecting or switching off any appliance, lamp or other user connected to the domestic electric installation.

Such electronic control circuit E is also provided with a buzzer and a warning lamp of the known type signalling the operation of the device so that people can try to find alternate lighting means in case of extended blackout or to switch off all of the users which are not strictly necessary in order to decrease the power consumption of battery B, the capacity of which is in any case limited.

A first advantage of the invention is that its installation does not require any modification to the existing electric system except for the replacement of the old electrical switchboard by that described above.

A second advantage of the invention is that flat dwellers do not have to change their habits or the way to switch on/off the lights or how white goods are connected/disconnected to/from the electric installation.

A third advantage is that it is not necessary to provide any emergency light which is among others anaesthetic, expensive and has a limited range of lighting.

A fourth advantage is that because of the warning signal, in case of a voltage drop due to a criminal action, the flat dwellers have the time to become aware of the violation by checking through the windows the adjoining houses and to take suitable precautions and/or countermeasures.

It is evident from the foregoing that the invention is particularly suitable in case flat dwellers are particularly sensitive to the sudden light blackout such as elders or people suffering from dark phobia that can find alternate lighting means such as candles or flashlights without panic.

Still according to the invention, the removable module (A) is preferably provided with an on/off switch I which is switched off when the emergency power supply has to be excluded, for example, in case the use of the house or flat is only seasonal or when maintenance works of the lighting section IL have to be carried out.

At last, it should be appreciated that, without modifying the inventive concept at the base of the present invention, the capacity of battery B can be increased at will keeping into account that greater capacities correspond to larger overall dimensions and/or higher cost. Therefore, the right compromise between supplied power during blackout time and the maximum dimensions of the device according to the invention should be planned.

To this end the above electronic control circuit E protects the device by disconnecting the battery in case the power consumption of the lighting section IL is too high upon a blackout or during the same.

The present invention has been described and illustrated according to preferred embodiments thereof, however, it should be understood that those skilled in the art can make equivalent modifications and/or replacements without departing from the scope of the present industrial invention.

For example, a variation could relate to the fact that the only removable portion without using implements could be battery B. In this case, electronic circuit B that can also have a very small size is fastened to its seat and the pins of connector C1 are only connected to the two poles of the battery and ground.

## Claims

1. An improved electrical switchboard comprising one or more differential and/or magnetothermal switches, wherein there is provided a transitory power supply means operating in case of blackout or an interruption of the electric power delivery, said power supply means being a removable battery or accumulator (B) **characterized in that** at least two magnetothermal differential switches (D1, D2) and a teleswitch or relay (R) are provided, wherein downstream of the power supply input is located the first magnetothermal differential switch (D1) which supplies directly a section of an electric installation of motive force (FM) and supplies through said teleswitch or relay a section of minor users (IL) said teleswitch or, and wherein downstream of relay (R) is located the second magnetotermal differential switch (D2) which supplies power to the section of minor users is indispensable for safety reasons when the supply is derived from battery (B) and the mains power supply as well as the first differential switch (D1) is disconnected..

2. The electrical switch board according to claim 1, **characterized in that** it includes terminal strips (M) for the connection of the mains input cables and cables supplying outlets (FM) and switches (IL) of the general electric installation with motive power, and is divided into two rooms, one for a fixed module (F), one for a mobile or removable module (A) capable of being electrically connected to the fixed module.

3. The electrical switch board according to the preceding claim, **characterized in that** fixed module (F) includes said magnetothermal differential switches (D1, D2), said teleswitch or relay (R) and a plug connector (C1) for the electric connection to mobile module (A)

4. The electrical switch board according to the preceding claim, **characterized in that** mobile or removable module (A) includes a battery (B) of the known type, an electronic circuit (E) controlling the power supplied by the battery (B) in case of blackout and the charge of the same battery during the normal electric power supply, and a plug connector (C2) conjugated to plug connector (C1) of fixed module (F).

5. The electrical switch board according to the preceding claim, **characterized in that** connectors (C1, C2) electrically connecting fixed module (F) and mobile module (A) are preferably quick-coupling connectors.

6. The electrical switch board according to the preceding claim, **characterized in that** the section of minor users consists in a lighting section (IL) and said lighting section (IL) is supplied by said relay or teleswitch (R) providing for the disconnection of the lighting section (IL) from the general power supply in a few milliseconds and for the connection of the same to battery (B) through connector (C1) in case of blackout, the power supply of battery (B) being controlled by the electronic control circuit (E) in a known manner.

7. The electrical switch board according to the preceding claim, **characterized in that** said relay (R) is preferably fed directly from the general power supply downstream of the first differential switch (D1) and has a rest position, i.e. a position in which the relay is brought in case of a voltage drop, corresponding to the connection of lighting section (IL) to battery (B)

8. The electrical switch board according to any preceding claim, **characterized in that** the current that charges battery (B) is derived from the first differential switch (D1).

9. The electrical switch board according to any claim from 3 to 7, **characterized in that** when the mains power supply or lighting is not necessary said teleswitch or relay (R) disconnects electrically said removable module (A) from the electric installation so that said removable module (A) can be connected/disconnect.ed to/from its housing without any contrary direction.

10. The electrical switch board according to any claim from 4 to 7 or 9, **characterized in that** said electronic control circuit .(E) is also provided with a buzzer and a warning lamp of the known type signalling the operation of the device so that people can try to find alternate lighting means in case of extended blackout or to switch off all of the users which are not strictly necessary in order to decrease the power consumption of battery (B), the capacity of which is in any case limited.

11. The electrical switch board according to claim 2, **characterized in that** removable module (A) its preferably provided with an on/off switch (I) which is switched off when the emergency power supply has to be excluded.

## Patentansprüche

1. Verbesserte elektrische Schalttafel, die einen oder mehrere Differentialschalter und/ oder magnetothermische Schalter aufweist, bei der ein provisorisches Spannungsversorgungsmittel für den Fall eines Ausfalls oder einer Unterbrechung der elektrischen Spannungsversorgung vorgesehen ist, wobei das Spannungsversorgungsmittel eine entfernbare Batterie oder ein entfernbarer Akkumulator (B) ist,
**dadurch gekennzeichnet, dass**
mindestens zwei magnetothermische Differentialschalter (D1, D2) und ein Fernschalter oder Relais (R) bereitgestellt sind, wobei der erste magnetothermische Differentialschalter (D1), der direkt einen Abschnitt einer elektrischen Installation mit Antriebskraft (FM) und über den Fernschalter oder das Relais einen Abschnitt von magnetothermischen untergeordneten Verbrauchern (IL) versorgt, nach dem Spannungsversorgungseingang angeordnet ist, und wobei der nach dem Relais (R) angeordnete zweite magnetothermische Differentialschalter (D2), der den Abschnitt der untergeordneten Verbraucher mit Spannung versorgt, aus Sicherheitsgründen unverzichtbar ist, wenn die Spannung aus der Batterie (B) bezogen wird und die Netzspannung sowie der erste Differentiaischalter (D1) getrennt sind.

2. Elektrische Schalttafel nach Anspruch 1, **dadurch gekennzeichnet, dass**
sie Klemmenleisten (M) für den Anschluss der Netzeingangskabel und der Kabel, mit der die Ausgänge (FM) und Schalter (IL) der allgemeinen elektrischen Installation mit Antriebskraft versorgt werden, enthält, wobei eine für ein stationäres Modul (F) vorgesehen ist, und eine für ein mobiles oder entfernbares Modul (A), das an das stationäre Modul elektrisch angeschlossen werden kann.

3. Elektrische Schalttafel nach dem vorigen Anspruch, **dadurch gekennzeichnet, dass**
das stationäre Modul (F) die magnetothermischen Differentialschalter (D1, D2), den Fernschalter oder das Relais (R) und einen Steckverbinder (C1) für den elektrischen Anschluss am mobilen Modul (A) enthält.

4. Elektrische Schalttafel nach dem vorigen Anspruch, **dadurch gekennzeichnet, dass**
das mobile oder entfernbare Modul (A) eine Batterie (B) des bekannten Typs, eine elektronische Schaltung (E), die die von der Batterie (B) im Fall eines Spannungsausfalls gelieferte Spannung und das Aufladen der Batterie während der normalen elektrischen Spannungsversorgung steuert, und einen Steckverbinder (C2), der einem Steckverbinder (C1) des stationären Moduls (F) zugeordnet ist.

5. Elektrische Schalttafel nach dem vorigen Anspruch, **dadurch gekennzeichnet, dass**
die das stationäre Modul (F) und das mobile Modul (A) verbindenden Steckverbinder (C1, C2) vorzugsweise Schnellkopplungs-Steckverbinder sind.

6. Elektrische Schalttafel nach dem vorigen Anspruch, **dadurch gekennzeichnet, dass**
der Abschnitt der untergeordneten Verbraucher aus einem Beleuclltungsabschnitt (IL) besteht, und dass der Beleuchtungsabschnitt (IL) vom Relais oder Fernschalter (R) versorgt wird, das bzw. der innerhalb weniger Millisekunden für die Trennung des Beleuchtungsabschnitt (IL) von der allgemeinen Spannungsversorgung und im Fall eines Spannungsausfalls für den Anschluss desselben an die Batterie (B) sorgt, wobei die Spannungsversorgung der Batterie (B) auf bekannte Weise von der elektronischen Steuerschaltung (E) gesteuert wird.

7. Elektrische Schalttafel nach dem vorigen Anspruch, **dadurch gekennzeichnet, dass**
das Relais (R) vorzugsweise direkt von der allgemeinen Spannungsversorgung nach dem ersten Differentialschalter (D1) gespeist wird und eine Reset-Position hat, d. h. eine Position, in der das Relais im Fall eines Spannungsausfalls entsprechend dem Anschluss des Beleuchtungsabschnitts (IL) an die Batterie (B) aktiviert wird.

8. Elektrische Schalttafel nach einem der vorigen Ansprüche, **dadurch gekennzeichnet, dass**
der die Batterie (B) ladende Strom vom ersten Differentialschalter (D1) bezogen wird.

9. Elektrische Schalttafel nach einem der Ansprüche 3 bis 7, **dadurch gekennzeichnet, dass**
dann, wenn die Netzversorgung oder die Beleuchtung nicht erforderlich sind, der Fernschalter oder das Relais (R) das entfernbare Modul (A) von der elektrischen Installation elektrisch trennt, so dass das entfernbare Modul (A) ohne jegliche Gegenrichtung an sein/von seinem Gehäuse angeschlossen/getrennt werden kann.

10. Elektrische Schalttafel nach einem der Ansprüche 4 bis 7 oder 9, **dadurch gekennzeichnet, dass**
die elektronische Steuerschaltung (E) außerdem mit einem Summer und einer Warnlampe des bekannten Typs ausgeführt ist, der bzw. die den Betrieb des Geräts signalisieren, so dass im Fall eines längeren Spannungsausfalls nach alternativen Beleuchtungsmitteln gesucht werden kann, oder alle nicht unbedingt notwendigen Verbraucher abgeschaltet werden, um die Leistungsaufnahme der Batterie (B) zu verringern, deren Kapazität stets begrenzt ist.

11. Elektrische Schalttafel nach Anspruch 2, **dadurch gekennzeichnet, dass**
das entfernbare Modul (A) vorzugsweise mit einem Ein-/Aus-Schalter (I) versehen ist, der ausgeschaltet wird, wenn die Not-Spannungsversorgung aufzuschließen ist.

## Revendications

1. Tableau électrique perfectionné de commutation comportant un ou plusieurs commutateur(s) différentiels) et/ou magnétothermique(s), dans lequel il est prévu une alimentation électrique transitoire fonctionnant en cas d'arrêt total ou d'interruption de l'alimentation électrique, ladite alimentation électrique étant une batterie amovible ou un accumulateur (B), **caractérisé en ce qu'**au moins deux commutateurs différentiels magnétothermiques (D1, D2) et un télérupteur ou un relais (R) sont prévus, dans lequel, en aval de l'entrée de l'alimentation électrique, est placé un premier commutateur différentiel magnétothermique (D1) qui alimente directement une section d'une installation électrique de force motrice (FM) et alimente par l'intermédiaire dudit télérupteur ou relais une section desdits télérupteur ou utilisateurs d'importance secondaire (IL), et dans lequel, en aval du relais (R), est situé un second commutateur différentiel magnétothermique (D2) qui alimente la section des utilisateurs d'importance secondaire et qui est indispensable pour des raisons de sécurité lorsque l'alimentation est réalisée à partir de la batterie (B) et que l'alimentation électrique provient du secteur alors que le premier commutateur différentiel (D1) est déconnecté.

2. Tableau électrique selon la revendication 1, **caractérisé en ce qu'**il comporte des barrettes à bornes (N) pour la connexion des câbles d'entrée du secteur, des câbles d'alimentation des sorties (FM) et des commutateurs (IL) de l'installation électrique dans son ensemble avec l'alimentation motrice, et **en ce qu'**il est divisé en deux compartiments, l'un pour un module fixe (F) et l'autre pour un module mobile ou amovible (A) pouvant être connecté électriquement au module fixe.

3. Tableau électrique selon la revendication précédente, **caractérisé en ce que** le module fixe (F) comporte lesdits commutateurs différentiels magnétothermique (D1, D2), ledit télérupteur ou relais (R) et un connecteur enfichable (C1) pour la connexion électrique au module mobile (A).

4. Tableau électrique selon la revendication précédente, **caractérisé en ce que** le module mobile ou amovible (A) comporte une batterie (B) de type connu, un circuit électronique (E) commandant l'alimentation électrique fournie par la batterie (B) en cas d'arrêt total et la charge de cette même batterie au cours de la fourniture normale d'alimentation électrique, et un connecteur enfichable (C2) associé au connecteur enfichable (C1) du module fixe (F).

5. Tableau électrique selon la revendication précédente, **caractérisé en ce que** les connecteurs (C1, C2) connectant électriquement le module fixe (F) et le module mobile (A) sont préférentiellement des connecteurs à accouplement rapide.

6. Tableau électrique selon la revendication précédente, **caractérisé en ce que** la section des utilisateurs d'importance secondaire dans une section d'éclairage (IL) et ladite section d'éclairage (IL) sont alimentés par ledit relais ou télérupteur (R) en prévision de la déconnexion de la section d'éclairage (IL) à partir de l'alimentation d'énergie générale en quelques millisecondes et de la connexion de celle-ci à la batterie (B) par l'intermédiaire du connecteur (C1) en cas d'arrêt total, l'alimentation électrique de la batterie (B) étant commandée par le circuit de commande électronique (E) d'une façon connue.

7. Tableau électrique selon la revendication précédente, **caractérisé en ce que** ledit relais (R) est de préférence alimenté directement à partir de l'alimentation d'énergie générale en aval du premier commutateur différentiel (D1) et **en ce qu'**il présente une position de repos, c'est-à-dire une position dans laquelle le relais est placé en cas de chute de tension, correspondant à la connexion de la section d'éclairage (IL) à la batterie (B).

8. Tableau électrique selon une revendication précédente quelconque, **caractérisé en ce que** le courant qui charge la batterie (B) provient du premier commutateur différentiel (D1).

9. Tableau électrique selon l'une quelconque des revendications 3 à 7, **caractérisé en ce que**, lorsque l'alimentation électrique du secteur ou l'éclairage n'est pas nécessaire, le ledit télérupteur ou relais nécessaire (R) déconnecte électriquement ledit module amovible (A) de l'installation électrique de sorte que ledit module amovible (A) puisse être connecté/déconnecté à/de son logement en absence d'une quelconque indication contraire.

10. Tableau électrique selon l'une quelconque des revendications 4 à 7 ou 9, **caractérisé en ce que** ledit circuit de commande électronique (E) est également prévu avec vibreur sonore et voyant avertisseur lumineux de type connu signalant le fonctionnement du dispositif de sorte que les gens puissent essayer de trouver des moyens d'éclairage alternatifs en cas d'arrêt total prolongé ou de couper tous les utilisateurs qui ne sont pas strictement nécessaires afin de diminuer la consommation électrique de la batterie (B), dont la capacité est de toute façon limitée.

11. Tableau électrique selon la revendication 2, **caractérisé en ce que** module amovible (A) est de préférence équipé d'un commutateur "Marche/Arrêt" (1) qui est coupé lorsque l'alimentation électrique de secours doit être exclue.
